# EUROPÄISCHE PATENTSCHRIFT

(11) **EP 2 658 749 B1**
(45) Veröffentlichungstag und Bekanntmachung des Hinweises auf die Patenterteilung: **18.11.2015**
(21) Anmeldenummer: 11799692.6
(22) Anmeldetag: 19.12.2011
(51) Int. Cl.: B60R 25/02, B62H 5/06

(54) **VORRICHTUNG ZUR ANSTEUERUNG EINES FEDERBELASTUNGSLOSEN SPERRGLIEDES**
DEVICE FOR ACTIVATING A LOCKING MEMBER WITHOUT ANY SPRING LOADING
DISPOSITIF DE COMMANDE D'UN ELEMENT DE BLOCAGE NON SOLLICITE ELASTIQUEMENT

(30) Priorität: 30.12.2010 DE 102010061640
(43) Veröffentlichungstag der Anmeldung: 06.11.2013
(73) Patentinhaber: Huf Hülsbeck & Fürst GmbH & Co. KG, 42551 Velbert (DE)
(72) Erfinder: MÖNIG, Stefan, 58332 Schwelm (DE); INDINGER, Max, Gauting 82131 (DE)
(74) Vertreter: Vogel, Andreas
(86) Internationale Anmeldenummer: PCT/EP2011/073261
(87) Internationale Veröffentlichungsnummer: WO 2012/089547

(56) Entgegenhaltungen:
- EP-A1- 1 783 016
- EP-A1- 1 857 335
- EP-A1- 1 892 506
- GB-A- 690 468
- JP-A- 6 263 071
- JP-A- 2000 016 361

## Beschreibung

Die Erfindung betrifft eine Vorrichtung zur Ansteuerung eines Sperrgliedes für ein funktionswesentliches Bauteil eines Kraftfahrzeuges mit einem Antrieb, der mit dem Sperrglied in mechanischer Wirkverbindung steht, wobei das Sperrglied in eine Verriegelungsstellung und eine Entriegelungsstellung und umgekehrt bringbar ist, wobei in der Verriegelungsstellung das Sperrglied eine Bewegung des funktionswesentlichen Bauteils verhindert und in der Entriegelungsstellung das Sperrglied eine Bewegung des funktionswesentlichen Bauteils ermöglicht.

In der EP 1 892 506 A1 ist eine Lenkungsverriegelung mit einem federbelasteten Sperrglied offenbart. Das Sperrglied blockiert hierbei in seiner Verriegelungsstellung eine verzahnte Lenksäule eines Kraftfahrzeuges. Falls die Lenksäule sich in einer Fehlstellung befindet, erreicht das Sperrglied nicht seine eigentliche Verriegelungsstellung, sondern schlägt auf einen Zahn der Lenksäule. Die Federbelastung des Sperrgliedes ermöglicht, dass es bei einer Fehlstellung der Lenksäule nicht zu Materialzerstörungen am Sperrglied und/oder an der Lenksäule führt. In einigen Anwendungsfällen ist eine Federbelastung des Sperrgliedes nachteilig, da insbesondere zusätzliche Bauteile "wie eine Feder" notwendig sind oder bei Fehlstellung der Lenksäule es immer wieder zu störenden Geräuschentwicklungen beim Auftreffen des Sperrgliedes auf einen Zahn der Lenksäule kommt.

Das Dokument JPH - 06 263 071 A offenbart eine gattungsgemäße Vorrichtung zur Ansteuerung eines Sperrgliedes.

Es ist Aufgabe der vorliegenden Erfindung, eine Vorrichtung zur Ansteuerung eines Sperrgliedes zu beschaffen, bei der die genannten Nachteile vermieden werden, insbesondere eine Vorrichtung bereitgestellt wird, die eine einfache Gesamtkonstruktion aufweist und gleichzeitig das Sperrglied nur dann in die Verriegelungsstellung ausfährt, wenn das funktionswesentliche Bauteil sich nicht in einer Fehlstellung befindet.

Zur Lösung dieser Aufgabe wird eine Vorrichtung mit sämtlichen Merkmalen des Anspruches 1 vorgeschlagen. In den abhängigen Ansprüchen sind bevorzugte Weiterbildungen ausgeführt.

Erfindungsgemäß wird eine Vorrichtung zur Ansteuerung eines federbelastungslosen Sperrgliedes eines funktionswesentlichen, beweglichen Bauteils, insbesondere einer Lenkeinheit eines Motorrades vorgeschlagen, mit einem Antrieb, der mit dem Sperrglied in mechanischer Wirkverbindung steht, wobei das Sperrglied in eine Verriegelungsstellung und eine Entriegelungsstellung und umgekehrt bringbar ist, wobei in der Verriegelungsstellung das Sperrglied eine Bewegung des funktionswesentlichen Bauteils verhindert, in der Entriegelungsstellung das Sperrglied eine Bewegung des funktionswesentlichen Bauteils ermöglicht, ein für den Benutzer von außen zugängliches Betätigungselement vorgesehen ist, das zwischen einer Ruhelage und einer Betriebslage bewegbar ist, in der Betriebslage des Betätigungselementes eine Bewegung des Sperrgliedes in zumindest eine Stellung auslösbar ist, und eine mechanische Positionserfassungseinheit mit einem feststehenden Steuerelement vorgesehen ist, das mit einer dreidimensionalen Kontur ausgeführt ist, die mit einem Aktivierungselement des Betätigungselement derart zusammenwirkt, dass erst bei einer definierten Stellung des beweglichen Bauteils eine Bewegung des Betätigungselementes in die Betriebslage ermöglicht ist. Ein wesentlicher Kern der Erfindung ist, dass das Sperrglied federbelastungslos ausgeführt ist, so dass der Antrieb direkt mit dem Sperrglied in Verbindung steht. Somit kann eine einfache mechanische Kopplung zwischen Antrieb und Sperrglied erzielt werden, wodurch gleichzeitig die Anzahl der Bauteile reduzierbar ist. Ein weiterer wesentlicher Kern der Erfindung ist, dass die Positionserfassung des funktionswesentlichen Bauteils rein mechanisch erfolgt, die stromlos funktioniert und somit keine zusätzliche Stromversorgung benötigt. Die Störungsanfälligkeit der Pösitionserfassungseinheit auf Grund ihrer rein mechanischen Wirkungsweise kann nahezu ausgeschlossen werden.

Vorteilhafterweise kann das Steuerelement ringartig an einem feststehenden Rahmenteil befestigt sein. Hierbei kann die dreidimensionale Kontur an dem ringartigen Steuerelement ausgeführt sein. In einer bevorzugten Ausführungsform der Erfindung ist das funktionswesentliche Bauteil eine Lenkeinheit des Motorrades, die um eine Achse verschwenkt werden kann. Befindet sich die Lenkeinheit in einer definierten Stellung, nachdem sie entsprechend weit um die Achse nach links und/oder nach rechts verschwenkt worden ist, erkennt die mechanische Positionserfassungseinheit diese Stellung der Lenkeinheit, damit über eine entsprechende Aktivierung des Betätigungselementes der Antrieb zur Bewegung des Sperrgliedes in Richtung Betriebslage ermöglicht wird. Vorteilhafterweise kann das Steuerelement über Befestigungsmittel, wie Schraubelemente am feststehenden Rahmenteil befestigt sein. Dieser Bereich des feststehenden Rahmenteils kann zylinderartig und/oder rohrartig ausgeführt sein und sich in Richtung Vorderrad des Motorrades erstrecken. In einer möglichen Ausführungsform der Erfindung ist das Steuerelement an einem Lenkkopf der Lenkeinheit des Motorrades befestigt.

In einer möglichen Ausführungsform der Erfindung kann die Kontur des Steuerelementes mit einem Wirkbereich ausgeführt sein, in dem das Aktivierungselement in die Betriebslage überführbar ist, wobei der Wirkbereich in der dreidimensionalen Kontur als Ausbuchtung, Einbuchtung oder als Öffnung ausgeführt ist. Ebenfalls ist es denkbar, dass das Steuerelement einen zum Wirkbereich benachbart angeordneten Blockierbereich aufweist, der in Abhängigkeit von der Stellung des funktionswesentlichen Bauteils eine Bewegung des Betätigungselementes in die Betriebslage verhindert. Alternativ und/öder zusätzlich kann vorgesehen sein, dass der Wirkbereich und der Blockierbereich auf zwei unterschiedlichen Ebenen liegen, die insbesondere parallel zueinander liegen.

Desweiteren kann das Steuerelement mit mindestens einem Anschlag, vorzugsweise mit zwei Anschlägen ausgeführt sein, wodurch die Bewegung des funktionswesentlichen Bauteils begrenzt ist. Somit weist das Steuerelement gemäß dieser Ausführungsform eine weitere Funktion auf, und zwar dass es die maximale Verschwenkung beispielsweise der Lenkeinheit über die Anschläge definiert. Die Anschläge sind vorzugsweise radial zur Drehachse der Lenkeinheit ausgerichtet, um eine zufriedenstellende Funktionsweise zur Begrenzung des maximalen Einschlages der Lenkereinheit zu schaffen. Bei einer Bewegung der Lenkeinheit kontaktiert ein Gegenanschlag in einer definierten Lage der Lenkeinheit den Anschlag des Steuerelementes, wobei der Gegenanschlag sich stets mit der Lenkeinheit mit bewegt und der Anschlag des Steuerelementes am feststehenden Rahmenteil unbeweglich verbleibt.

Erfindungsgemäß kann das feststehende Rahmenteil mindestens eine Arretierkontur aufweisen, mit der das Sperrglied in der Verriegelungsstellung derart zusammenwirkt, dass eine Bewegung des funktionswesentlichen Bauteils verhindert ist. Die Arretierkontur kann beispielsweise eine Einbuchtung sein, in die das Sperrglied in seiner Verriegelungsstellung eingreift, wobei in der Entriegelungsstellung das Sperrglied losgelöst vom Rahmenteil positioniert ist.

In einer möglichen Ausführungsform der erfindungsgemäßen Vorrichtung kann die Lenkeinheit eine Gabelbrücke aufweisen, an der das Betätigungselement angeordnet ist, wobei das Betätigungselement mit dem Antrieb koppelbar ist, wobei der Antrieb mit der Lenkeinheit derart verbunden ist, dass bei einer Bewegung der Lenkeinheit gleichzeitig der Antrieb mit dem Sperrglied sich mit bewegt.

Ebenfalls ist es denkbar, dass die Gabelbrücke seitlich zwei voneinander beabstandete Aufnahmen aufweist, in denen jeweils ein Gabelrohr befestigt ist. Jedes Gabelrohr führt in Richtung Vorderrad des Motorrades, wobei das Gabelrohr parallel zur Drehachse der Lenkeinheit verläuft.

Des Weiteren kann eine Zentralstange mittig zu den Gabelrohren an der Gabelbrücke angeordnet sein, die insbesondere durch das Rahmenteil verläuft, das rohrartig ausgeführt ist. Hierbei kann die Zentralstange zum feststehenden Rahmenteil beweglich, insbesondere rotationsbeweglich gelagert sein. Ein kompakter Aufbau der erfindungsgemäßen Vorrichtung kann dadurch erzielt werden, dass das Steuerelement einen mittigen Durchbruch aufweist, durch den die Zentralstange verläuft.

Vorteilhafterweise ist es möglich, dass das Aktivierungselement mit dem Betätigungselement ein gemeinsames und/oder monolithisches Bauteil bildet, wobei insbesondere das Aktivierungselement nicht von außen sichtbar durch die Gabelbrücke verdeckt ist. Beispielsweise kann das Aktivierungselement mit dem Betätigungselement ein Spritzgussteil aus Kunststoff darstellen.

Ferner ist es denkbar, dass das Aktivierungselement vorsprungsartig sich vom Betätigungselement in Richtung Steuerelement erstreckt. Das Aktivierungselement kann beispielsweise als eine vorsprungartige Nase mit einem freien Ende ausgebildet sein, welches bei einer entsprechenden Betätigung des Betätigungselementes durch den Benutzer den Wirkbereich und/oder den Blockierbereich des Steuerelementes kontaktieren kann.

Die mechanische Positionserfassungseinheit ist derart ausgeführt, dass während der Bewegung des funktionswesentlichen Bauteils das Aktivierungselement leicht beabstandet zum Blockierbereich des Steuerelementes ist. Erfolgt eine Betätigung des Betätigungselementes durch den Benutzer, obwohl das funktionswesentliche Bauteil noch nicht seine definierte Stellung erreicht hat, führt das Betätigungselement mit dem Aktivierungselement eine leichte Hubbewegung in Richtung Steuerelement aus, bis das Aktivierungselement den Blockierbereich kontaktiert. Eine weitere Bewegung des Betätigungselementes in Richtung Betriebslage ist nicht möglich. Alternativ kann vorgesehen sein, dass bei einer Bewegung des funktionswesentlichen Bauteils das Aktivierungselement bereits das Steuerelement berührt und erst ab einer definierten Stellung des beweglichen Bauteils den Kontakt mit dem Steuerelement verliert und gleichzeitig beabstandet zum Wirkbereich des Steuerelementes ist. Wenn nun der Benutzer auf das Betätigungselement drückt, hat das Betätigungselement einen ausreichenden Abstand zum Wirkbereich, um aus seiner Ruhelage in die Betriebslage zu verfahren.

In einer die Erfindung verbessernden Maßnahme kann vorgesehen sein, dass das Aktivierungselement vorsprungartig sich vom Betätigungselement in Richtung Steuerelement erstreckt. Hierbei dient das vorsprungartige Aktivierungselement als eine Art Taster, der mechanisch für die Positionserfassungseinheit die Stellung des funktionswesentlichen Bauteils "ertastet".

Zudem kann erfindungsgemäß vorgesehen sein, dass die Bewegung des Betätigungselementes von seiner Ruhelage in die Betriebslage nur für einen Notfallbetrieb vorgesehen ist, wobei insbesondere für den Notfallbetrieb ein Notschlüssel in eine Aufnahme des Betätigungselementes einbringbar ist. Alternativ und/oder zusätzlich kann für einen Normalbetrieb das Betätigungselement mit dem Antrieb in Signalverbindung stehen, wodurch über eine bewusste Aktivierung des Betätigungselements eine elektronische Ansteuerung des Antriebes bewirkbar ist, wobei insbesondere das Betätigungselement einen Näherungssensor oder einen Berührungssensor aufweist.

Beispielsweise ist erfindungsgemäß denkbar, dass im Normalbetrieb das Betätigungselement vom Antrieb, welcher in der Regel aus unterschiedlichen Getriebeteilen, Zahnrädern etc. besteht, mechanisch losgelöst ist, wobei über eine Aktivierung des Betätigungselementes, beispielsweise durch eine Annäherung oder eine Berührung des Betätigungselementes, ein Signal ausgelöst wird, wodurch eine entsprechende elektronische Ansteuerung des Antriebes erzielt wird, welches das Sperrglied in die gewünschte Stellung fährt. Falls nun in einem Notfallbetrieb keine Stromversorgung der erfindungsgemäßen Vorrichtung bereitgestellt werden kann, ist eine rein manuelle Bewegung des Antriebes durch den Benutzer durchführbar. Dazu ist vorgesehen, dass das Betätigungselement in einem derartigen Notfallbetrieb mit dem Antrieb und seinem Getriebe mechanisch gekoppelt werden kann, so dass beispielsweise das Betätigungselement und das Getriebe des Antriebes sich in einem Formschluss befinden beziehungsweise mechanisch in Wirkverbindung stehen. Der Benutzer kann über das Betätigungselement eine gewisse Kraft auf das Getriebe übertragen, welches wiederum eine entsprechende Bewegung des Sperrgliedes in seine jeweilige Stellung auslöst.

In einer möglichen Ausführungsform kann in dem Notfallbetrieb der Notschlüssel in die Aufnahme des Betätigungselementes eingebracht werden. Der Notschlüssel kann beispielsweise in einem ID-Geber, den der Benutzer bei sich trägt, angeordnet sein. Das Betätigungselement ist vorzugsweise verschiebbar innerhalb der Lenkeinheit gelagert. Für den Notfallbetrieb wird der Notschlüssel in das Betätigungselement eingeschoben. Durch eine entsprechende Kraftaufbringung auf den Schlüssel entsteht eine Bewegung des Betätigungselementes in Richtung Getriebe bis das Betätigungselement in Wirkverbindung zum Getriebe steht. Über eine Drehung des Betätigungselementes, das zum Beispiel auch als Schließzylinder ausgeführt sein kann, erfolgt eine Betätigung des Getriebes, wodurch eine Kraftübertragung auf das Sperrglied erfolgt, das sich wiederum in seine jeweilige Stellung bewegt.

Vorteilhafterweise ist das Betätigungselement mit einem Näherungssensor und/oder einem Berührungssensor ausgestattet. In einer weiteren Ausführungsform kann für den Normalbetrieb eine Kappe vorgesehen sein, die das Betätigungselement beziehungsweise seine Aufnahme für den Notschlüssel abschirmt. Das bedeutet, dass für den Benutzer die Aufnahme, in der der Notschlüssel einbringbar ist, nicht sichtbar ist. Für den Notfallbetrieb kann die Kappe von der Aufnahme des Betätigungselementes entfernt, weggeschwenkt, wegbewegt, etc. werden. Ebenfalls kann die Kappe gewindeartig am Betätigungselement aufgeschraubt sein.

In einer weiteren vorteilhaften Ausgestaltung weist das Betätigungselement ein Anzeigemittel auf, das zur Darstellung von Informationen für den Benutzer dient. Es ist denkbar, dass das Betätigungselement auch zum Motorstart des Motorrades dienen kann. Das bedeutet, dass sowohl zur Entriegelung und Verriegelung des Motorrades als auch zum Starten des Motors das Betätigungselement als einziges Bauteil dient. Über das Anzeigemittel kann dem Benutzer informativ mitgeteilt werden, dass beispielsweise die Zündung aktiviert ist oder der Motor gestartet ist.

Das Getriebe des Antriebes ist vorzugsweise selbsthemmend ausgeführt. Beispielsweise kann der Antrieb einen Elektromotor mit einem sich daran anschließenden Schneckenrad aufweisen, das ein weiteres Getriebeteil antreibt, um eine entsprechende Bewegung auf das Sperrglied zu übertragen. Die Selbsthemmung aufgrund des Einsatzes des Schneckenrades verhindert wirkungsvoll, dass ungewollt das Sperrglied aus seiner jeweiligen Stellung sich bewegt.

Die erfindungsgemäße Vorrichtung kann als elektromechanische Lenkungsverriegelung für ein Motorrad zum Einsatz kommen, wobei die Vorrichtung zudem problemlos mit insbesondere so genannten Keyless-Entry-Systemen kombinierbar ist. Die erfindungsgemäße Vorrichtung wird durch eine Aktivierung des Betätigungselementes, insbesondere nach einem Authentifizierungsvorgang gestartet, der vor der Aktivierung oder während der Aktivierung oder nach der Aktivierung des Betätigungselementes liegen kann. Dabei ermöglicht die Erfindung selbstverständlich eine Rückmeldung dahingehend, ob die betreffende Vorrichtung die Lenkeinheit des Motorrades zuverlässig blockiert oder nicht. Dies kann zum Beispiel durch eine optische oder akustische Meldevorrichtung dargestellt werden. Eine mögliche Ausführungsform ist, dass diese Information über das Anzeigemittel des Betätigungselementes dem Benutzer visualisiert wird.

Weitere Vorteile, Merkmale und Einzelheiten der Erfindung ergeben sich aus der nachfolgenden Beschreibung, in der unter Bezugnahme auf die Zeichnungen eine mögliche Ausführungsform der Erfindung beschrieben ist. Dabei können die in den Ansprüchen und in der Beschreibung erwähnten Merkmale jeweils einzeln für sich oder in beliebiger Kombination erfindungswesentlich sein. Es zeigen:
- Figur 1: eine erfindungsgemäße Vorrichtung zur Ansteuerung eines Sperrgliedes einer Lenkeinheit eines Motorrades,
- Figur 2: die Vorrichtung gemäß Figur 1, wobei sich die Lenkeinheit in einer ersten Stellung befindet und
- Figur 3: die Vorrichtung gemäß Figur 1, wobei die Lenkeinheit sich in einer zweiten Stellung befindet.

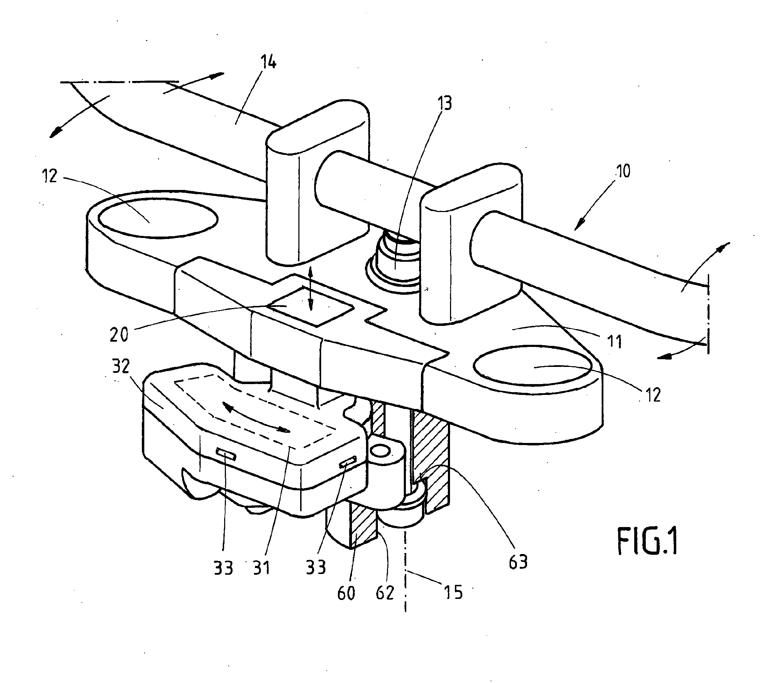

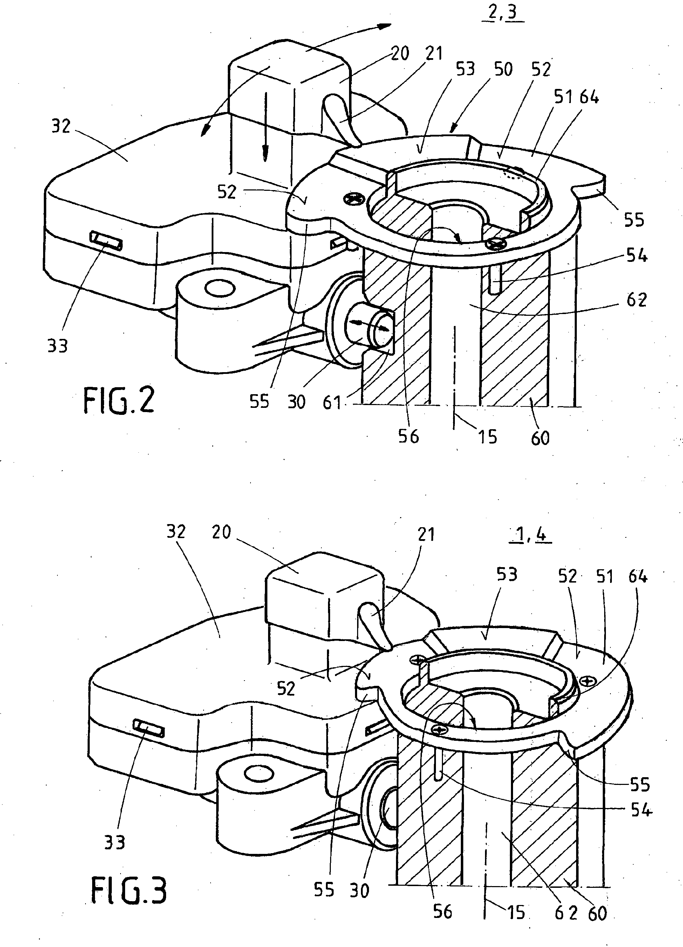

In den Figuren 1 bis 3 ist eine erfindungsgemäße Vorrichtung zur Ansteuerung eines Sperrgliedes 30 gezeigt, wobei das Sperrglied 30 über einen rein schematisch dargestellten Antrieb 31 bewegt werden kann. Das Sperrglied 30 befindet sich hierbei in mechanischer Wirkverbindung mit dem Antrieb 31. Der Antrieb 31 kann selbsthemmend ausgeführt sein und unter anderem einen elektrischen Motor und diverse Getriebeelemente, wie Schneckenrad etc. aufweisen, die das Sperrglied 30 in Bewegung bringen können. Hierbei ist das Sperrglied 30 in eine Verriegelungsstellung 1, die in Figur 3 gezeigt ist, und in eine Entriegelungsstellung 2, die in Figur 2 gezeigt ist, und umgekehrt bringbar.

In der Verriegelungsstellung 1 verhindert das Sperrglied 30 eine Bewegung der Lenkeinheit 10. In der Entriegelungsstellung 2 weist das Sperrglied 30 eine derartige Position auf, dass eine Bewegung der Lenkeinheit 10 um die Achse 15 möglich ist. Zudem ist für den Benutzer ein von außen zugängliches Betätigungselement 20 an der Lenkeinheit 10 vorgesehen. Das Betätigungselement 20 ist ein Schalter, der über eine Hubbewegung zwischen einer Ruhelage 3 (siehe Figur 2) und einer Betriebslage 4 (siehe Figur 3) bewegt werden kann. In der Betriebslage 4 des Betätigungselementes 20 ist eine Bewegung des Sperrgliedes 30 in die Verriegelungsstellung 1 und/oder die Entriegelungsstellung 2 auslösbar.

Zudem ist eine mechanische Positionserfassungseinheit 50 mit einem feststehenden Steuerelement 51 gemäß Figur 2 und Figur 3 vorgesehen, wobei das Steuerelement 51 mit einer dreidimensionalen Kontur ausgeführt ist, die mit einem Aktivierungselement 21 des Betätigungselementes 20 derart zusammenwirkt, dass erst bei einer definierten Stellung der Lenkeinheit 10 eine Bewegung des Betätigungselementes 20 in die Betriebslage 4 gemäß Figur 3 ermöglicht ist.

Wie Figur 2 und Figur 3 verdeutlichen ist das Steuerelement 51 ringartig an einem feststehenden Rahmenteil 60 befestigt. Die Befestigung erfolgt über Schrauben 54. Gemäß Figur 1 weist die Lenkeinheit 10 eine Gabelbrücke 11 auf, an der das Betätigungselement 20 befestigt ist. Gleichzeitig ist der Antrieb 31 mit der Lenkeinheit 10 derart verbunden, dass bei einer Bewegung der Lenkeinheit 10 gleichzeitig der Antrieb 31 mit dem Sperrglied 30 sich bewegen kann. Die Gabelbrücke 11 weist seitlich zwei voneinander beabstandete Aufnahmen 12 auf, in denen jeweils ein nicht explizit gezeigtes Gabelrohr befestigt ist. Jedes Gabelrohr erstreckt sich in Richtung des Vorderrades des Motorrades, welches ebenfalls nicht in den Figuren gezeigt ist. Ferner ist eine Zentralstange 13 mittig zu den Gabelrohren an der Gabelbrücke 11 angeordnet, die durch das Rahmenteil 60 verläuft, welches rohrartig ausgeführt ist. Hierbei weist das Rahmenteil 60 eine Durchführung 62 für die Zentralstange 13 auf, wobei die Zentralstange 13 beweglich zum feststehenden Rahmenteil 60 in der Durchführung 62 gelagert ist.

Der Antrieb 31 ist innerhalb eines Gehäuses 32 angeordnet, wobei das Gehäuse 32 aus Gehäusehälften besteht, die über Rastelemente 33 verschlossen sind.

Gemäß Figur 2 und Figur 3 liegt das Steuerelement 51 auf dem rohrförmigen Rahmenteil 60 auf, wobei ein Kragen 64 aus dem Durchbruch 56 des Steuerelementes 51 herausragt. Gleichzeitig erstreckt sich die Zentralstange 31 durch den Durchbruch 56 in die Durchführung 62 des Rahmenteils 60. Der Kragen 64 bewirkt, dass das Steuerelement 51 zuverlässig auf dem Rahmenteil 60 aufliegt und korrekt montierbar ist.

Die Kontur des Steuerelementes 51 ist mit einem Wirkbereich 52 ausgeführt, in dem das Aktivierungselement 21 in die Betriebslage 4 führbar ist. Ferner weist das Steuerelement 51 einen zum Wirkbereich 52 benachbart angeordneten Blockierbereich 53 auf. Der Blockierbereich 53 liegt zwischen zwei Wirkbereichen 52. In Abhängigkeit von der Stellung der Lenkeinheit 10 lässt sich das Betätigungselement 10 in die Betriebslage 4 gemäß Figur 3 überführen oder nicht, welches in Figur 2 gezeigt ist. Gemäß Figur 2 verhindert nämlich der Blockierbereich 53, dass das Betätigungselement 20 seine vollständige Hubbewegung in Richtung Betriebslage 4 ausführen kann. Hierbei kommt das Aktivierungselement 21 des Betätigungselementes 20 in Kontakt mit dem Blockierbereich 53 und verhindert gleichzeitig eine weitere Bewegung in Richtung Betriebslage 4.

Gemäß des gezeigten Ausführungsbeispiels liegen beide Wirkbereiche 52 auf gleicher Ebene. Der dazwischen liegende Blockierbereich 53 befindet sich auf einer oberen Ebene.

Wie Figur 2 verdeutlich, weist das bestehende Rahmenteil 60 eine Arretierkontur 61 in Form einer Ausnehmung auf, in die Sperrglied 30 in der Verriegelungsstellung 1 einfahren kann. Gemäß Figur 2 befindet sich jedoch das Sperrglied 30 in seiner Entriegelungsstellung 2, in der es nicht in der Arretierkontur 61 eingefahren ist. Im Gegensatz dazu befindet sich das Sperrglied 30 gemäß Figur 3 innerhalb der Arretierkontur 61, die nicht explizit dargestellt ist. Das Sperrglied 30 ist gemäß des Ausführungsbeispiels direkt mit dem Antrieb 31 verbunden, ohne dass eine Feder zwischen dem Sperrglied 30 und dem Antrieb 31 angeordnet ist. Das Sperrglied 30 ist somit federbelastungslos in der erfindungsgemäßen Vorrichtung integriert.

Zudem ist das Steuerelement 51 mit zwei Anschlägen 55 ausgeführt, wodurch die Bewegung der Lenkeinheit 10 begrenzt ist. Bewegt der Benutzer die Lenkeinheit 10 um die Drehachse 15, erfolgt in einer definierten Auslenkung der Lenkeinheit 10 eine Kontaktierung eines der Anschläge 55 mit einem explizit nicht dargestellten Gegenanschlag, der beispielsweise an der Lenkeinheit 10, insbesondere an der Gabelbrücke 11 ausgeführt ist. Die Stellung der Lenkeinheit 10, bei der der Anschlag 55 des Steuerelementes 51 kontaktiert wird, ist die Stellung, die die Lenkeinheit 10 maximal um die Achse 15 gedreht werden kann. Damit das Betätigungselement 20 in seine Betriebslage 4 gebracht werden kann, ist es hingegen eine geringere Drehung der Lenkeinheit 10 um die Achse 15 notwendig.

Gemäß des gezeigten Ausführungsbeispiels bildet das Aktivierungselement 21 mit dem Betätigungselement 20 ein gemeinsames Bauteil, wobei das Aktivierungselement 21 nicht von außen sichtbar durch die Gabelbrücke 11 verdeckt ist. Hierbei streckt sich das Aktivierungselement 21 vorsprungartig vom Betätigungselement 21 in Richtung Steuerelement 52.

Das gezeigte Ausführungsbeispiel kann darauf gerichtet sein, dass die Bewegung des Betätigungselementes 20 von seiner Ruhelage 3 in seine Betriebslage 4 nur für einen Notfallbetrieb vorgesehen ist, wobei für den Notfallbetrieb ein Notschlüssel in eine Aufnahme des Betätigungselementes 20 einbringbar ist. Der Notschlüssel sowie die Aufnahme, sind hier nicht explizit dargestellt. Ferner kann vorgesehen sein, dass für einen Normalbetrieb das Betätigungselement 20 mit dem Antrieb 31 in Signalverbindung steht, wodurch über eine bewusste Aktivierung des Betätigungselementes 20 eine elektronische Ansteuerung des Antriebes 31 bewirkt werden kann. Die bewusste Aktivierung des Betätigungselementes 20 kann eine Annäherung zum Betätigungselement 20 oder eine Berührung des Betätigungselementes 20 sein.

Alternativ kann vorgesehen sein, dass für den Normalbetrieb der Benutzer aktiv auf das Betätigungselement 20 drücken muss, damit das Betätigungselement 20 eine entsprechende Hubbewegung ausübt, falls eine Bewegung des Sperrgliedes 30 in seine Verriegelungsstellung 1 und/oder Entriegelungsstellung 2 gewünscht ist.

Wie in Figur 1 gezeigt ist, weist das feststehende Rahmenteil 60 einen Absatz 63 auf, der verhindert, dass die Zentralstange 13 nach oben in Richtung Lenker 14 aus der Durchführung 62 des Rahmenteils 60 herausgezogen werden kann.

### Bezugszeichenliste

- 1: Verriegelungsstellung
- 2: Entriegelungsstellung
- 3: Ruhelage
- 4: Betriebslage

- 10: funktionswesentliches Bauteil, Lenkeinheit
- 11: Gabelbrücke
- 12: Aufnahme
- 13: Zentralstange
- 14: Lenker
- 15: Achse

- 20: Betätigungselement
- 21: Aktivierungselement

- 30: Sperrglied
- 31: Antrieb
- 32: Gehäuse
- 33: Rastelement

- 50: Positionserfassungseinheit
- 51: Steuerelement
- 52: Wirkbereich
- 53: Blockierbereich
- 54: Schraube
- 55: Anschlag
- 56: Durchbruch

- 60: Rahmenteil
- 61: Arretierkontur
- 62: Durchführung
- 63: Absatz
- 64: Kragen

## Patentansprüche

1. Vorrichtung zur Ansteuerung eines federbelastungslosen Sperrgliedes (30) für ein funktionswesentliches, bewegliches Bauteil (10), insbesondere für eine Lenkeinheit (10) eines Motorrades, mit einem federbelastungslosen Sperrglied (30) und
mit einem Antrieb (31), der mit dem Sperrglied (30) in mechanischer Wirkverbindung steht, wobei das Sperrglied (30) in eine Verriegelungsstellung (1) und eine Entriegelungsstellung (2) und umgekehrt bringbar ist, wobei
in der Verriegelungsstellung (1) das Sperrglied (30) eine Bewegung des funktionswesentlichen Bauteils (10) verhindern kann,
in der Entriegelungsstellung (2) das Sperrglied (30) eine Bewegung des funktionswesentlichen Bauteils (10) ermöglichten kann,
ein für den Benutzer.von Außen zugängliches Betätigungselement (20) vorgesehen ist, das zwischen einer Ruhelage (3) und einer Betriebslage (4) bewegbar ist,
in der Betriebslage (4) des Betätigungselementes (20) eine Bewegung des Sperrgliedes (30) in zumindest eine Stellung (1, 2) auslösbar ist,
**dadurch gekennzeichnet,**
**dass** eine mechanische Positionserfassungseinheit (50) mit einem feststehenden Steuerelement (51) vorgesehen ist, das mit einer dreidimensionalen Kontur ausgeführt ist, die mit einem Aktivierungselement (21) des Betätigungselements (20) derart zusammenwirkt, dass erst bei einer definierten Stellung des beweglichen Bauteils (10) eine Bewegung des Betätigungselementes (20) in die Betriebslage (4) ermöglicht ist.

2. Vorrichtung nach Anspruch 1,
**dadurch gekennzeichnet,**
**dass** das Steuerelement (51) ringartig an einem feststehenden Rahmenteil (60) befestigt ist.

3. Vorrichtung nach Anspruch 1 oder 2,
**dadurch gekennzeichnet,**
**dass** die Kontur des Steuerelementes (51) mit einem Wirkbereich (52) ausgeführt ist, in dem das Aktivierungselement (21) in die Betriebslage (4) überführbar ist, wobei der Wirkbereich (52) in der dreidimensionalen Kontur als Ausbuchtung, Einbuchtung oder als Öffnung ausgeführt ist.

4. Vorrichtung nach einem der vorhergehenden Ansprüche,
**dadurch gekennzeichnet,**
**dass** das Steuerelement (51) mit mindestens einem Anschlag (55), vorzugsweise mit zwei Anschlägen (55) ausgeführt ist, wodurch die Bewegung des funktionswesentlichen Bauteils (10) begrenzt ist.

5. Vorrichtung nach einem der vorhergehenden Ansprüche,
**dadurch gekennzeichnet,**
**dass** das Steuerelement (51) einen zum Wirkbereich (52) benachbart angeordneten Blockierbereich (53) aufweist, der in Abhängigkeit von der Stellung des funktionswesentlichen Bauteils (10) eine Bewegung des Betätigungselementes (20) in die Betriebslage (4) verhindert, wobei insbesondere der Wirkbereich (52) und der Blockierbereich (53) auf zwei unterschiedlichen Ebenen liegen, die insbesondere parallel zueinander liegen.

6. Vorrichtung nach einem der vorhergehenden Ansprüchen,
**dadurch gekennzeichnet,**
**dass** das feststehende Rahmenteil (60) mindestens eine Arretierkontur (61) aufweist, mit der das Sperrglied (30) in der Verriegelungsstellung (1) derart zusammenwirkt, dass eine Bewegung des funktionswesentlichen Bauteils (10) verhindert ist.

7. Vorrichtung nach einem der vorhergehenden Ansprüchen,
**dadurch gekennzeichnet,**
**dass** in der Verriegelungsstellung (1) das Sperrglied (30) in das Rahmenteil (60) eingreift,
in der Entriegelungsstellung (2) das Sperrglied (30) losgelöst vom Rahmenteil (60) ist.

8. Vorrichtung nach einem der vorhergehenden Ansprüchen,
**dadurch gekennzeichnet,**
**dass** die Lenkeinheit (10) eine Gabelbrücke (11) aufweist, an der das Betätigungselement (20) angeordnet ist, wobei das Betätigungselement (20) mit dem Antrieb (31) koppelbar ist, wobei der Antrieb (31) mit der Lenkeinheit (10) derart verbunden ist, dass bei einer Bewegung der Lenkeinheit (10) gleichzeitig der Antrieb (31) mit dem Sperrglied (30) sich mitbewegt, wobei insbesondere die Gabelbrücke (11) seitlich zwei voneinander beabstandete Aufnahmen (12) aufweist, in denen jeweils ein Gabelrohr befestigt ist.

9. Vorrichtung nach Anspruch 8,
**dadurch gekennzeichnet,**
**dass** eine Zentralstange (13) mittig zu den Gabelrohren an der Gabelbrücke (11) angeordnet ist, die insbesondere durch das Rahmenteil (60) verläuft, das rohrartig ausgeführt ist.

10. Vorrichtung nach Anspruch 9,
**dadurch gekennzeichnet,**
**dass** die Zentralstange (13) zum feststehenden Rahmenteil (60) beweglich gelagert ist.

11. Vorrichtung nach einem der vorhergehenden Ansprüchen,
**dadurch gekennzeichnet,**
**dass** das Aktivierungselement (21) mit dem Betätigungselement (20) ein gemeinsames und/oder monolithisches Bauteil bilden, wobei insbesondere das Aktivierungselement (21) nicht von außen sichtbar durch die Gabelbrücke (11) verdeckt ist.

12. Vorrichtung nach einem der vorhergehenden Ansprüchen,
**dadurch gekennzeichnet,**
**dass** das Aktivierungselement (21) vorsprungsartig sich vom Betätigungselement (20) in Richtung Steuerelement (51) erstreckt.

13. Vorrichtung nach einem der vorhergehenden Ansprüchen,
**dadurch gekennzeichnet,**
**dass** die Bewegung des Betätigungselementes (20) von seiner Ruhelage (3) in die Betriebslage (4) nur für einen Notfallbetrieb vorgesehen ist, wobei insbesondere für den Notfallbetrieb ein Notschlüssel in eine Aufnahme des Betätigungselementes (20) einbringbar ist.

14. Vorrichtung nach einem der vorhergehenden Ansprüchen,
**dadurch gekennzeichnet,**
**dass** für einen Normalbetrieb das Betätigungselement (20) mit dem Antrieb (31) in Signalverbindung steht, wodurch über eine bewusste Aktivierung des Betätigungselements (20) eine elektronische Ansteuerung des Antriebes (31) bewirkbar ist, wobei insbesondere das Betätigungselement (20) einen Näherungssensor oder einen Berührungssensor aufweist.

15. Vorrichtung nach einem der vorhergehenden Ansprüchen,
**dadurch gekennzeichnet,**
**dass** das Steuerelement (51) einen mittigen Durchbruch (56) aufweist, durch den die Zentralstange (13) verläuft.

## Claims

1. A device for actuating a locking member (30) without spring loading, for a functionally essential, movable component (10), in particular for a steering unit (10) of a motorcycle, having a locking member (30) without spring loading and having a drive (31), which is mechanically functionally connected to the locking member (30), it being possible to bring the locking member (30) into a locking position (1) and into an unlocking position (2),and vice versa,
the locking member (30) being able to prevent movement of the functionally essential component (10) when in the locking position (1),
the locking member (30) being able to allow movement of the functionally essential component (10) when in the unlocking position (2),
an operating element (20) being provided, which is accessible to a user from the outside and can be moved between a rest position (3) and an operating position (4),
it being possible to initiate movement of the locking member (30) into at least one position (1, 2) when the operating element (20) is in the operating position (4),
**characterised in that**
a mechanical position detection unit (50) having a stationary control element (51) is provided, which control element has a three-dimensional contour that interacts with an activation element (21) of the operating element (20) in such a manner that movement of the operating element (20) into the operating position (4) is only allowed when the movable component (10) is in a defined position.

2. The device according to claim 1,
**characterised in that**
the control element (51) is fastened to a stationary frame part (60) in a ring-like manner.

3. The device according to claim 1 or 2,
**characterised in that**
the contour of the control element (51) has an effective region (52) in which the activation element (21) can be transferred to the operating position (4), the effective region (52) being formed in the three-dimensional contour as a protrusion, recess or opening.

4. The device according to any one of the preceding claims,
**characterised in that**
the control element (51) has at least one stop (55), preferably two stops (55), as a result of which the movement of the functionally essential component (10) is limited.

5. The device according to any one of the preceding claims,
**characterised in that**
the control element (51) has a blocking region (53), which is arranged adjacently to the effective region (52) and prevents movement of the operating element (20) into the operating position (4) depending on the position of the functionally essential component (10), in particular the effective region (52) and the blocking region (53) lying in two different planes, which in particular lie parallel to each other.

6. The device according to any one of the preceding claims,
**characterised in that**
the stationary frame part (60) has at least one locking contour (61), with which the locking member (30) interacts when in the locking position (1) in such a manner that movement of the functionally essential component (10) is prevented.

7. The device according to any one of the preceding claims,
**characterised in that**
the locking member (30) engages in the frame part (60) when in the locking position (1),
and the locking member (30) is released from the frame part (60) when in the unlocking position (2).

8. The device according to any one of the preceding claims,
**characterised in that**
the steering unit (10) has a fork bridge (11), on which the operating element (20) is arranged, it being possible to couple the operating element (20) to the drive (31), the drive (31) being connected to the steering unit (10) in such a manner that, when the steering unit (10) moves, the drive (31) together with the locking member (30) also moves at the same time, in particular the fork bridge (11) laterally having two receptacles (12), which are spaced apart from each other and in each of which a fork tube is fastened.

9. The device according to claim 8,
**characterised in that**
a central rod (13) is arranged centrally to the fork tubes on the fork bridge (11), which central rod in particular runs through the frame part (60), which is tubular.

10. The device according to claim 9,
**characterised in that**
the central rod (13) is mounted movably in relation to the stationary frame part (60).

11. The device according to any one of the preceding claims,
**characterised in that**
the activation element (21) and the operating element (20) form a common and/or monolithic component, in particular the activation element (21) being covered by the fork bridge (11) such that it cannot be seen from outside.

12. The device according to any one of the preceding claims,
**characterised in that**
the activation element (21) extends in a projection-like manner from the operating element (20) in the direction of the control element (51).

13. The device according to any one of the preceding claims,
**characterised in that**
the movement of the operating element (20) from the rest position (3) thereof into the operating position (4) is only intended for emergency operation, it being possible to insert an emergency key into a receptacle in the operating element (20), in particular in an emergency.

14. The device according to any one of the preceding claims,
**characterised in that**
in normal operation the operating element (20) is signal-connected to the drive (31), as a result of which electronic actuation of the drive (31) can be effected by deliberate activation of the operating element (20), the operating element (20) in particular having a proximity sensor or a touch sensor.

15. The device according to any one of the preceding claims,
**characterised in that**
the control element (51) has a central hole (56) through which the central rod (13) runs.

## Revendications

1. Dispositif dévolu à la commande d'un organe de blocage (30) exempt de contrainte élastique, destiné à une pièce structurelle mobile (10) fonctionnellement essentielle, notamment à une unité de direction (10) d'une motocyclette, comprenant un organe de blocage (30) exempt de contrainte élastique et un entraînement (31) en liaison mécanique opérante avec ledit organe de blocage (30), ledit organe de blocage (30) pouvant être amené à une position de verrouillage (1) et à une position de déverrouillage (2), et inversement, sachant
que, dans la position de verrouillage (1), l'organe de blocage (30) peut empêcher un mouvement de la pièce structurelle (10) fonctionnellement essentielle, que, dans la position de déverrouillage (2), ledit organe de blocage (30) peut autoriser un mouvement de ladite pièce structurelle (10) fonctionnellement essentielle,
qu'il est prévu un élément d'actionnement (20) auquel l'utilisateur peut accéder de l'extérieur, et qui peut être mû entre une position de repos (3) et une position de fonctionnement (4),
qu'un mouvement de l'organe de blocage (30), vers au moins une position (1, 2), peut être déclenché dans la position de fonctionnement (4) dudit élément d'actionnement (20),
**caractérisé par le fait**
**qu'**il est prévu une unité mécanique (50) de détection d'emplacements, équipée d'un élément fixe de commande (51) muni d'un profil tridimensionnel qui coopère avec un élément d'activation (21) de l'élément d'actionnement (20) de façon telle qu'un mouvement dudit élément d'actionnement (20), vers la position de fonctionnement (4), soit rendu possible uniquement dans une position bien définie de la pièce structurelle mobile (10).

2. Dispositif selon la revendication 1,
**caractérisé par le fait**
**que** l'élément de commande (51) est fixé à une partie de cadre (60) stationnaire, à la manière d'un anneau.

3. Dispositif selon la revendication 1 ou 2,
**caractérisé par le fait**
**que** le profil de l'élément de commande (51) est doté d'une zone efficace (52) dans laquelle l'élément d'activation (21) peut être transféré à la position de fonctionnement (4), ladite zone efficace (52) étant réalisée, dans le profil tridimensionnel, sous la forme d'une région protubérante, d'une échancrure ou d'une ouverture.

4. Dispositif selon l'une des revendications précédentes,
**caractérisé par le fait**
**que** l'élément de commande (51) est pourvu d'au moins une butée (55), de préférence de deux butées (55), le mouvement de la pièce structurelle (10) fonctionnellement essentielle s'en trouvant ainsi limité.

5. Dispositif selon l'une des revendications précédentes,
**caractérisé par le fait**
**que** l'élément de commande (51) présente une zone de blocage (53) qui occupe une position voisine de la zone efficace (52) et qui, d'une manière dépendant de la position de la pièce structurelle (10) fonctionnellement essentielle, empêche un mouvement de l'élément d'actionnement (20) vers la position de fonctionnement (4), ladite zone efficace (52) et ladite zone de blocage (53) étant situées, en particulier, dans deux plans différents notamment parallèles l'un à l'autre.

6. Dispositif selon l'une des revendications précédentes,
**caractérisé par le fait**
**que** la partie de cadre (60) stationnaire comporte au moins un profil d'arrêt (61) avec lequel l'organe de blocage (30) coopère, dans la position de verrouillage (1), de manière à empêcher un mouvement de la pièce structurelle (10) fonctionnellement essentielle.

7. Dispositif selon l'une des revendications précédentes,
**caractérisé par le fait**
**que** l'organe de blocage (30) pénètre dans la partie de cadre (60), dans la position de verrouillage (1),
ledit organe de blocage (30) étant dissocié d'avec ladite partie de cadre (60) dans la position de déverrouillage (2).

8. Dispositif selon l'une des revendications précédentes,
**caractérisé par le fait**
**que** l'unité de direction (10) comporte une entretoise (11) de fourche sur laquelle l'élément d'actionnement (20) est implanté, ledit élément d'actionnement (20) pouvant être couplé à l'entraînement (31), ledit entraînement (31) étant relié à ladite unité de direction (10) de façon telle que ledit entraînement (31) se meuve en simultanéité avec l'organe de blocage (30) lors d'un mouvement de ladite unité de direction (10), ladite entretoise (11) de fourche étant notamment pourvue, dans le sens latéral, de deux logements (12) distants l'un de l'autre et dans lesquels une tubulure de fourche est respectivement fixée.

9. Dispositif selon la revendication 8,
**caractérisé par le fait**
**qu'**une tige centrale (13) occupe, par rapport aux tubulures de fourche, une position médiane sur l'entretoise (11) de fourche s'étendant, en particulier, en travers de la partie de cadre (60) qui présente une réalisation de type tubulaire.

10. Dispositif selon la revendication 9,
**caractérisé par le fait**
**que** la tige centrale (13) est montée mobile par rapport à la partie de cadre (60) stationnaire.

11. Dispositif selon l'une des revendications précédentes,
**caractérisé par le fait**
**que** l'élément d'activation (21) et l'élément d'actionnement (20) forment associativement une pièce structurelle commune et/ou monobloc, ledit élément d'activation (21) étant notamment recouvert par l'entretoise (11) de fourche, avec invisibilité depuis l'extérieur.

12. Dispositif selon l'une des revendications précédentes,
**caractérisé par le fait**
**que** l'élément d'activation (21) s'étend en direction de l'élément de commande (51) à partir de l'élément d'actionnement (20), à la manière d'une saillie.

13. Dispositif selon l'une des revendications précédentes,
**caractérisé par le fait**
**que** le mouvement de l'élément d'actionnement (20), de sa position de repos (3) vers la position de fonctionnement (4), est prévu uniquement pour un fonctionnement d'urgence, une clé d'urgence pouvant notamment être introduite, pour ledit fonctionnement d'urgence, dans un logement dudit élément d'actionnement (20).

14. Dispositif selon l'une des revendications précédentes,
**caractérisé par le fait**
**que**, pour un fonctionnement en mode normal, l'élément d'actionnement (20) est un liaison par signaux avec l'entraînement (31), de sorte qu'une commande électronique dudit entraînement (31) peut être provoquée par une activation délibérée dudit élément d'actionnement (20), ledit élément d'actionnement (20) étant notamment muni d'un capteur de proximité ou d'un capteur tactile.

15. Dispositif selon l'une des revendications précédentes,
**caractérisé par le fait**
**que** l'élément de commande (51) présente un évidement central (56) traversé par la tige centrale (13).
